Europäisches Patentamt

(19) European Patent Office

Office européen des brevets

(11) Publication number: **0 174 987**
**B1**

(12) **EUROPEAN PATENT SPECIFICATION**

(45) Date of publication of patent specification: **08.11.89**

(21) Application number: **85901711.3**

(22) Date of filing: **08.03.85**

(86) International application number:
**PCT/US85/00375**

(87) International publication number:
**WO 85/03913 12.09.85 Gazette 85/20**

(51) Int. Cl.⁴: **B 60 R 13/04, E 04 F 19/02, B 32 B 3/02**

(54) **EDGE PROTECTOR TRIM STRIP.**

(30) Priority: **08.03.84 US 587372**

(43) Date of publication of application:
**26.03.86 Bulletin 86/13**

(45) Publication of the grant of the patent:
**08.11.89 Bulletin 89/45**

(84) Designated Contracting States:
**DE FR GB SE**

(56) References cited:
**DE-A-2 613 193**
**DE-A-2 649 422**
**DE-A-2 825 726**
**US-A-3 167 825**
**US-A-3 685 231**
**US-A-4 092 813**
**US-A-4 232 081**
**US-A-4 432 166**

(73) Proprietor: **SCHLEGEL CORPORATION**
**400 East Avenue**
**Rochester, New York 14607 (US)**

(72) Inventor: **RYBA, Robert, M.**
**735 Providence Road**
**Maryville, TN 37801 (US)**
Inventor: **JACKSON, Winton, W., Jr.**
**1101 Sevierville Road**
**Maryville, TN 37801 (US)**

(74) Representative: **Carpmael, John William Maurice et al**
**CARPMAELS & RANSFORD 43 Bloomsbury Square**
**London, WC1A 2RA (GB)**

Courier Press, Leamington Spa, England.

## Description

This invention relates in general to edge protector trim strips and more particularly to an edge protector trim strip having improved installation and retention characteristics compared to prior art trim strips.

An early example of edge protector trim strips may be found in US—A—3,198,689. Such trim strips are commonly employed to seal the edges of metal panels or plates of doors, door frames or other projecting edge parts of the interiors of automobile bodies and the like and strips of the type shown in US—A—3198689 as well as improvements thereon have become extremely widely employed for such purposes.

A persistent problem attending the use of such strips has been to provide a strip which requires only a reasonable force to install while at the same time providing great resistance to removal.

Trim strips of the type with which this invention is concerned are normally manufactured in indefinite lengths and have a generally U-shaped cross-section, are resiliently deformable and capable of bending and are normally manufactured of rubbery or plastic material strengthened by a metallic or equivalent carrier located inside the rubbery or plastic material. The strips are held in place on the flange by means of grippers or fins extending inwardly from the arms of the U towards the base of the U, the grippers or fins being deformable and made of rubber or plastic material. Examples of such prior art trim strips are shown in US—A—4,092,813; US—A—4,232,081; US—A—4,188,765; US—A—4,015,814; US—A—3,685,231; US—A—3,545,157 and US—A—3,167,825. These patents show various combinations of hard and soft grippers or fins within a U-shaped profile and various combinations of large and small fins on one side or the other of the interior of such profiles.

It has been recognized, specifically in US—A—4,092,813, that providing a U-shaped trim strip with a fin or gripper of a soft material which functions as an antisliding surface improves the retention characteristics of the trim strip. It is claimed in the patent that the ratio of the force required to remove it is about 1:2. While the trim strip of US—A—4092813, which has three small fins of soft material and one large fin with a surface layer of soft material thereon, was a significant improvement over the art at the time it was made, the current requirements for installation and retention forces and particularly for retention forces exceed those which can be provided by any of the prior art trim strips.

It has heretofore been believed that increased retention characteristics could only be achieved by increasing the amount of anti-sliding material on the grippers or fins of a trim strip, or by increasing the stiffness of the metal carrier within the trim strip or both. For example, where wire carriers are employed, increasing the gauge of the wire used to knit said carrier from .762 mm (0.030") to .914 mm (0.036") has been proposed. It has been determined that such changes only minimally increase the retentive capacity of such trim strips, and that they increase the installation force as well. Additionally, increasing the stiffness of the metal carrier of such trim strips decreases the flexibility of the strip as a whole, and reduces the capability of the strip to conform to sharp radius corners. Still further, increasing the stiffness of the metal carrier increases the weight of the strip as well as the cost thereof.

Accordingly, it is an object of this invention to provide an edge protector trim strip having a significantly improved ratio of installation force to retention force.

It is a further object of this invention to provide an edge protector trim strip that is flexible and retains the capability of following contours including sharp bends or corners, which can be manufactured using substantially the same methods and equipment as prior art trim strips, and which still resists the leakage of water between the strip and the flange to which it is mounted.

According to the present invention, we provide an edge protector trim strip having first and second leg portions joined by a base portion, and a locking fin for imparting different installation force and removal force characteristics to the trim strip, said fin having a layer of high coefficient of friction material on a flange-engaging surface of the fin, characterised in that said layer is located at or adjacent to an end of said fin, and in that said locking fin is so shaped, and said layer of higher coefficient of friction material is so located on said fin, that the area of contact between said high coefficient of friction layer and the flange is greater during removal of said trim strip from the flange than during installation, whereby a trim strip is provided which requires a force to install the strip on a flange which is substantially less than the force required to remove the strip from the flange.

Preferably, the edge protector trim strip having a body of generally U-shaped cross-section, is formed of polymeric material such as rubber or plastic and is stiffened by a semi-rigid carrier. Preferably, one or more grippers or fins extends from each of the arms of the U inwardly therefrom towards the base of the U and at least one of the said fins has the layer of high coefficient of friction material substantially only on the end thereof. The fin on which the layer of high coefficient of friction material is located is shaped so that during installation of the strip, only a limited portion of such layer contacts the flange on which the strip is mounted. Preferably, the fin to which the high coefficient of friction layer is attached is cam-shaped or curved so as to ride on the leading edge of the flange and thereby to at least partially retract on installation of the trim strip to reduce the area of contact between the high coefficient of friction layer and the flange. The fin is preferably designed to urge the high coefficient of friction material into a larger area of contact with the flange on removal of the trim strip, and increase the pressure between the high coefficient of friction layer and the flange thereby greatly increasing the force required to remove the trim strip from the flange.

While the best prior art trim strips have provided ratios of insertion force to removal force of one to four, the trim strip of this invention yields ratios as high as one to seven or one to eight or greater.

While the novel features of the invention are pointed out with particularity in the appended claims, the invention itself together with further objects and advantages thereof may be more fully understood by reference to the following detailed description thereof taken in connection with the accompanying drawing in which:

Figure 1 is a sectional view of an edge protector trim strip in accordance with a preferred embodiment of this invention;

Figure 2 is a sectional view of the edge protector trim strip of Fig. 1 mounted on a metal flange; and

Figure 3 is a sectional view of the edge protector trim strip of Fig. 1 mounted on a metal flange.

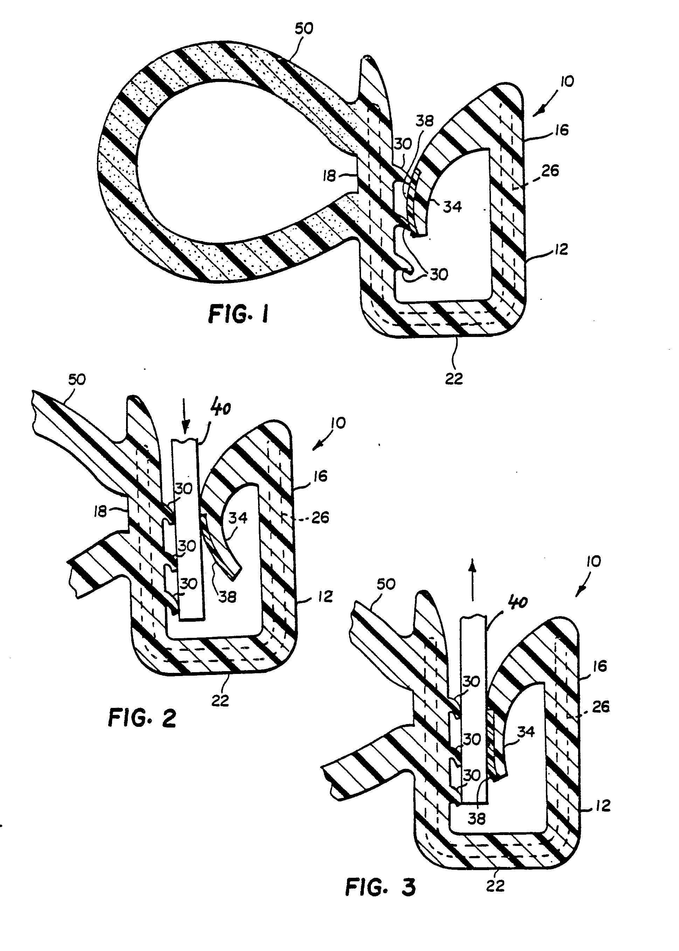

Referring now to Figure 1, an edge protector trim strip 10 has a generally U-shaped body portion 12 including first and second legs 16 and 18 connected by a base 22. As can be seen from Fig. 1, the strip may have a sealing member 50 attached to or integral with the arm 18 to provide a combined edge protector, trim and sealing strip, which can form a seal with the periphery of a door of the vehicle when the latter is closed. Alternatively, the sealing member 50 may be in the form of a separate member applied to the periphery of the door. Body 12 is preferably formed principally of a resilient plastic or rubbery material such as rubber or polyvinyl chloride or TPR having a durometer in the range of 60—80 as measured on the Shore A hardness scale. Body 12 may be extruded over a semi-rigid carrier 26 of known construction such as a U-shaped knitted wire carrier or a U-shaped stamped metal carrier, each of conventional design and often times used in edge protector trim strips of this type. In accordance with the present invention, one arm 18 of body 12 has one or more inwardly projecting minor fins extending from the inner surface of the arm 18 towards base 22. Preferably, minor fins 30 are formed of the same plastic or rubbery material as body 12 and may conveniently be formed along with body 12 by extrusion. Preferably, sealing member 50 is softer than body 12 as is well known.

Opposite leg 16 of body 12 has a major fin 34 projecting therefrom towards base 22 of body 12. Preferably, major fin 34 is formed from the same plastic or rubbery material as body 12 and minor fins 30 and includes, adjacent to the tip thereof, a layer of high coefficient of friction material 38 which is substantially restricted to the inner end portion of fin 34.

Preferably, the high coefficient of friction layer 38 is formed from rubber or other material having both a high coefficient of friction and good sealing characteristics with respect to a flange on which the trim strip of this invention is mounted. In this way, a seal is formed between the trim strip and the flange that prevents water from leaking around the end of the flange. Layer 38 and sealing member 50 may be formed of the same material, preferably rubber, thereby reducing the number of materials that are co-extruded to two.

Fin 34 is shaped, and layer 38 is located thereon so that when a trim strip is installed on a flange, the leading edge of the flange displaces fin 34 and reduces the area of contact between layer 38 and the side of the flange. Preferably, fin 34 is cam-shaped as shown to permit a relatively large layer of high coefficient of friction material to be used while at the same time limiting the surface area of the layer that contacts the flange during installation to less than the entire surface of such layer, and preferably a minor portion thereof.

It will be appreciated that while a curved fin 34 is preferred, a straight fin and preferably a straight tapered fin can accomplish the same function. Preferably, when a straight tapered fin is employed, a smaller layer of high coefficient of friction material is placed on the fin and is located only close to the end of the fin.

By utilizing one or more resilient, but not particularly high coefficient of friction, minor fins 30 and a single major fin 34 in combination with a small layer of high coefficient of friction material 38 on the major fin 34, a trim strip is provided with a unique combination of ease of installation and high retentive force. Additionally, because minor fins 30 do not have a particularly high coefficient of friction, a plurality of such fins may be employed significantly to improve the seal between the trim strip and the flange while retaining the desired installation and retention characteristics.

Referring now to Figure 2, the trim strip of Figure 1 is shown as installed on a metal flange 40. As trim strip 10 is forced onto flange 40, minor fins 30 and major fin 34 retract to a slightly bent over position as shown in Figure 2. Preferably, minor fins 30 do not exhibit a particularly high coefficient or friction and do not significantly impede the installation of the trim strip onto flange 40 with the U-shaped hollow center portion of the trim strip receiving the flange. Major fin 34 and high coefficient of friction layer 38 thereon which contacts flange 40 during installation tend to resist the insertion of flange 40. However, because fin 34 is resilient, it is readily pushed back and does not impart a substantial amount of pressure at the point of contact between layer 38 and flange 40. In this way, insertion of the flange into the trim strip may be accomplished with a force on the order of 15 newtons.

As the trim strip is pulled from the flange minor fins 30 offer little resistance to removal, but continue to urge flange 40 against a high coefficient of friction layer 38 of major fin 34. Layer 38 grips the surface of flange 40 tightly, thereby increasing the pressure on fins 30 as more force is exerted on trim strip 10, and more of the surface of layer 38 comes into contact with the flange. It is important that fins 30, unlike the soft fins used in US—A—4092813, resist such forces to maintain the increasingly large area of contact between layer 38 and the opposite surface of flange 40. In this way, as can be clearly seen by reference to Figure 3, flange 40 is substantially locked into place and removal forces in excess of 100 newtons are required to pull the trim strip off the flange. It is the use of relatively firm low coefficient of friction minor fins 30 that allows a small layer of high coefficient of friction material securely to lock the trim strip onto flange 40. Because only a small layer of high coefficient of friction material is necessary, the insertion force required to install the trim strip is significantly reduced from prior art trim strips while surprisingly, removal force is increased.

Although other trim strips have achieved either low insertion force or great resistance to removal, none has achieved the combination thereof in a manner even approaching that achieved by this invention. US—A—4092813 employed a plurality of relatively high friction, but soft gripper fins in place of Applicant's relatively hard low friction fins 30 and additionally employed a major fin having substantially the entire inner surface thereof covered with a high coefficient of friction soft material in place of Applicant's fin 34. Unfortunately, the resistance to installation on a flange exhibited by the prior art trim strip was higher than desirable while at the same time the resistance to removal was lower then desirable. This is believed to be due to the large area of contact between the high coefficient of friction material forming the three small fins and the inner surface of the large fin. The high coefficient of friction material on such fins contacts the flange over a significantly wider area than is the case with Applicant's invention. This, coupled with the inability of the soft fins to provide the resistance to removal provided by Applicant's relatively stiff fins 30 increases the insertion force and decreases the removal force.

While the invention has been shown in connection with a presently preferred embodiment thereof, it will be recognized by those skilled in the art that certain modifications and changes may be made thereto without departing from the true scope of the invention which is defined in the claims. For example, while three minor fins 30 have been illustrated, it will be understood that the number of such fins is not critical and may be reduced or increased as desired. Further, while only a single major fin 34 is required, an additional major fin may be employed, recognizing that the same will at least slightly increase both the insertion force and the retention force of the trim strip.

## Claims

1. A substantially U-shaped edge protector trim strip having first and second leg portions (16, 18) joined by a base portion (22), and a locking fin (34) for imparting different installation force and removal force characteristics to the trim strip, said fin having a layer of high coefficient of friction material (38) on a flange-engaging surface of the fin, characterised in that said layer (38) is located at or adjacent an end of said fin, and in that said locking fin is so shaped, and said layer of higher coefficient of friction material is so located on said fin, that the area of contact between said high coefficient of friction layer and the flange is greater during removal of said trim strip from the flange than during installation, whereby a trim strip is provided which requires a force to install the strip on a flange which is substantially less than the force required to remove the strip from the flange.

2. Trim strip according to claim 1 including a resilient body (10) of substantially U-shaped configuration surrounding a semi-rigid carrier (26) and including the first and second leg portions (16, 18) joined by the base portion (22), and wherein at least one locking fin (30, 34) extends from the inner surface of each leg portion (16, 18) generally towards said base portion (22) of said body (10), the average durometer of each of said fins (30, 34) being substantially equal and said fins having a first coefficient of friction, and the layer of relatively higher coefficient of friction material (38) being provided on the end of one of said fins (34), characterised in that when said trim strip is applied to the flange, the one fin (34) will deflect to move the end of said one fin (34) with said layer of higher coefficient of friction material (38) towards the leg portion (16) from which the fin (34) projects so that the majority of said material (38) does not engage said flange during fitting of the trim strip to the flange, but which will move in the opposite direction on removal of the trim strip from the flange, to bring said material (38) into engagement with the flange.

3. A trim strip according to claim 1 or 2 characterised in that said fins (30, 34) comprise the same material as the body portion (10) of said trim strip.

4. A trim strip according to claim 1, 2 or 3 characterised in that said layer of relatively high coefficient of friction material (38) comprises a layer of material having a durometer of less than the durometer of said one fin (34).

5. A trim strip according to claim 1, 2, 3 or 4 comprising three fins (30) extending from said one leg portion (18) and one fin (34) extending from said other leg portion (16), characterised in that said layer of relatively high coefficient of friction material (38) is provided only on the end of said one fin (34).

6. A trim strip according to any one of claims 1—5 wherein said fin (34) is cam-shaped.

7. A trim strip according to any one of claims 1—6 characterised in that fin (34) is tapered.

## Patentansprüche

1. Im wesentlichen U-förmige Kantenschutz-Zierleiste, die erste und zweite Schenkelbereiche (16, 18), die durch einen Basisbereich (22) verbunden sind, und eine Festhalteflosse (34) zum Ausüben von voneinander verschiedenen Kräftecharakteristiken auf die Zierleiste beim Installieren und Entfernen aufweist, wobei die Flosse eine Materialschicht (38) mit hohem Reibungskoeffizienten auf einer an einem Flansch angreifenden Oberfläche der Flosse aufweist, dadurch gekennzeichnet, daß die Schicht (38) an einem Ende der Flosse oder an das Ende derselben angrenzend angeordnet ist, und daß die Festhalteflosse so geformt und daß die Materialschicht mit höherem Reibungskoeffizienten auf der Flosse so angeordnet ist, daß die Berührungsfläche zwischen der Schicht mit hohem Reibungskoeffizienten und dem Flansch während des Entfernens der Zierleiste vom Flansch größer ist als während der Installation, wodurch eine Zierleiste geschaffen wird, die zum Installieren der Leiste auf einem Flansch eine Kraft erfordert, die wesentlich kleiner ist als die Kraft, die zum Entfernen der Leiste vom Flansch erforderlich ist.

2. Zierleiste nach Anspruch 1, die einen elastischen Hauptteil (10) von im wesentlichen U-förmigen Aufbau einschließt, der einen halbstarren Träger (26) umgibt und die ersten und zweiten Schenkelbereiche (16, 18), die durch den Basisbereich (22) verbunden sind, einschließt, und wobei sich wenigstens eine Festhalteflosse (30, 34) von der inneren Oberfläche jedes Schenkelbereichs (16, 18) allgemein zu dem Basisbereich (22) des Hauptteils (10) hin erstreckt, wobei die durchschnittliche Härte jeder der Flossen (30, 34) im wesentlichen gleich ist und die Flossen einen ersten Reibungskoeffizienten haben und die Materialschicht (38) mit relativ höherem Reibungskoeffizienten auf dem Ende einer der Flossen (34) vorgesehen ist, dadurch gekennzeichnet, daß, wenn die Zierleiste am Flansch angebracht wird, die eine Flosse (34) sich biegen wird, um das Ende der einen Flosse (34) mit der Materialschicht (38) mit höherem Reibungskoeffizienten zum Schenkelbereich (16), von dem die Flosse (34) absteht, zu bewegen, so daß der größte Teil des Materials (38) beim Anbringen der Zierleiste am Flansch am Flansch nicht angreift, sich aber beim Entfernen der Zierleiste vom Flansch in der anderen Richtung bewegen wird, um das Material (38) mit dem Flansch in Eingriff zu bringen.

3. Zierleiste nach Anspruch 1 oder 2, dadurch gekennzeichnet, daß die Flossen (30, 34) dasselbe Material wie der Hauptteil (10) der Zierleiste aufweisen.

4. Zierleiste nach Anspruch 1, 2 oder 3, dadurch gekennzeichnet, daß die Materialschicht (38) mit relativ hohem Reibungskoeffizienten eine Materialschicht aufweist, die eine Härte hat, die geringer ist als die Härte der einen Flosse (34).

5. Zierleiste nach Anspruch 1, 2, 3 oder 4, die drei Flossen (30), die sich von dem einen Schenkelbereich (18) erstrecken, und eine Flosse (34) aufweist, die sich von dem anderen Schenkelbereich (16) erstreckt, dadurch gekennzeichnet, daß die Materialschicht (38) mit relativ hohem Reibungskoeffizienten nur auf dem Ende der einen Flosse (34) vorgesehen ist.

6. Zierleiste nach einem der Ansprüche 1 bis 5, dadurch gekennzeichnet, daß die Flosse (34) nasen- oder nochenförmig ist.

7. Zierleiste nach einem der Ansprüche 1 bis 6, dadurch gekennzeichnet, daß die Flosse (34) abgeschrägt oder zugespitzt ist.

**Revendications**

1. Une bande enjoliveuse de protection de bord sensiblement en forme de U possédant des première et deuxième parties de pattes (16, 18), reliées par une partie de base (22), et une nervure de verrouillage (34) pour appliquer des caractéristiques de force d'installation et de force d'enlèvement différentes à la bande enjoliveuse, ladite nervure comportant une couche de matière (38) à coefficient de frottement élevé sur une surface de contact de la nervure et d'une bride, caractérisée en ce que ladite couche (38) est située sur une extrémité de ladite nervure ou adjacente à celle-ci, et en ce que ladite nervure de verrouillage est formée de telle façon, et ladite couche de matière à coefficient de frottement plus élevé est placée de telle façon sur ladite nervure, que la zone de contact entre ladite couche à coefficient de frottement élevé et la bride est plus importante lors de l'enlèvement de ladite bande enjoliveuse hors de la bride que lors de l'installation, ce qui fournit une bande enjoliveuse qui exige pour installer la bande sur une bride une force qui est sensiblement inférieure à la force exigée pour enlever la bande de la bride.

2. Une bande enjoliveuse selon la revendication 1 comportant un corps élastique (10) de configuration sensiblement en forme de U entourant un support semi-rigide (26) et comportant les première et deuxième parties de pattes (16, 18) reliées par la partie de base (22), et dans laquelle au moins une nervure de verrouillage (30, 34) s'étend à partir de la surface intérieure de chaque partie de patte (16, 18) de façon générale vers ladite partie de base (22) dudit corps (10), la valeur au duromètre moyenne de chacune desdites nervures (30, 34) étant sensiblement égal et lesdites nervures possédant un premier coefficient de frottement, et la couche de matière (38) à coefficient de frottement plus élevé étant disposée sur l'extrémité de l'une desdites nervures (34), caractérisée en ce que, lorsque ladite bande enjoliveuse est appliquée sur la bride, l'une des nervures (34) fléchie pour déplacer l'extrémité de ladite nervure (34) avec ladite couche de matière (38) à coefficient de frottement plus élevé vers la partie de patte (16) à partir de laquelle fait saillie la nervure (34) de sorte que la majeure partie de ladite matière (38) n'est pas en contact avec ladite bride lors de l'ajustage de la bande enjoliveuse sur la bride, mais qui se déplace dans le sens opposé lorsqu'on enlève la bande enjoliveuse de la bride, pour amener ladite matière (38) en contact avec la bride.

5

3. Une bande enjoliveuse selon la revendication 1 ou 2, caractérisée en ce que lesdites nervures (30, 34) sont constituées de la même matière que la partie de corps (10) de ladite bande enjoliveuse.

4. Une bande enjoliveuse selon la revendication 1, 2 ou 3, caractérisée en ce que ladite couche de matière (38) à coefficient de frottement relativement élevé est constituée d'une couche de matière présentant une valeur au duromètre inférieure à la valeur au duromètre de ladite première nervure (34).

5. Une bande enjoliveuse selon la revendication 1, 2, 3 ou 4 comprenant 3 nervures (30) s'étendant à partir de ladite première partie (18) de pattes et une nervure (34) s'étendant à partir de l'autre dite partie (16) de pattes, caractérisée en ce que ladite couche de matière (38) à coefficient de frottement relativement élevé n'est prévue que sur l'extrémité de ladite première nervure (34).

6. Une bande enjoliveuse selon l'une quelconque des revendications 1 à 5, dans laquelle ladite nervure (34) est en forme de came.

7. Une bande enjoliveuse selon l'une quelconque des revendications 1 à 6 caractérisée en ce que ladite nervure (34) est conique.

FIG. 1

FIG. 2

FIG. 3